(19) 

Europäisches
Patentamt
European
Patent Office
Office européen
des brevets

(11) **EP 4 572 171 A1**

(12) **EUROPEAN PATENT APPLICATION**
published in accordance with Art. 153(4) EPC

(43) Date of publication:
**18.06.2025 Bulletin 2025/25**

(21) Application number: **23851922.7**

(22) Date of filing: **10.08.2023**

(51) International Patent Classification (IPC):
**H04B 7/06** (2006.01)

(52) Cooperative Patent Classification (CPC):
**H04B 7/06**

(86) International application number:
**PCT/CN2023/112162**

(87) International publication number:
**WO 2024/032701 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210969110**

(71) Applicant: **Datang Mobile Communications
Equipment Co., Ltd.
Beijing 100085 (CN)**

(72) Inventors:
• JIN, Liqiang
**Beijing 100085 (CN)**
• HUANG, Qiuping
**Beijing 100085 (CN)**
• GAO, Qiubin
**Beijing 100085 (CN)**
• FEI, Yongqiang
**Beijing 100085 (CN)**

(74) Representative: **Studio Torta S.p.A.
Via Viotti, 9
10121 Torino (IT)**

(54) **CHANNEL STATE INFORMATION PROCESSING METHOD AND APPARATUS**

(57) The present disclosure relates to the field of communications. Provided are a channel state information processing method and apparatus. The method comprises: inputting channel state information into an encoder model, so as to obtain extended and enhanced channel state information output by the encoder model; and sending the extended and enhanced channel state information to a network device, wherein the encoder model comprises an encoder and a channel state information extension and enhancement module, which is cascaded with the encoder.

EP 4 572 171 A1

```
                    ┌─────────┐
                    │  Start  │
                    └────┬────┘
                         │
  ┌──────────────────────▼──────────────────────────┐
  │ Inputting channel state information to an encoder │      310
  │ model to obtain expanded and enhanced channel     │
  │ state information output from the encoder model   │
  └──────────────────────┬──────────────────────────┘
                         │
  ┌──────────────────────▼──────────────────────────┐
  │ Transmitting the expanded and enhanced channel    │      320
  │ state information to a network device             │
  └──────────────────────┬──────────────────────────┘
                         │
                    ┌────▼────┐
                    │   End   │
                    └─────────┘
```

FIG. 3

**Description**

CROSS-REFERENCES TO RELATED APPLICATIONS

The present application claims priority to Chinese patent application No. 202210969110.3 filed on August 12, 2022, entitled "Channel State Information Processing Method and Apparatus", which is hereby incorporated by reference in its entirety.

FIELD

The present application relates to the field of communications, and in particular, to methods and apparatuses for channel state information processing.

BACKGROUND

Currently, an artificial intelligence (AI)-based channel state information (CSI) compression feedback solution usually designs an AI model under a given feedback overhead, a given number of multiple-input multiple-output (MIMO) layers, a given number of MIMO ports or a given number of subbands.

In case that multiple network configuration parameters exist, in a related solution, multiple sets of AI models need to be trained, which will increase a complexity of training the AI models and a storage overhead for the AI models. Taking 8 types of feedback overhead, 4 layers of MIMO, and 8 types of ports as an example, a network layer and a terminal need to train and deploy one AI model for $8 \times 4 \times 8 = 256$ parameter configurations separately, which brings challenges for training models and storing models.

BRIEF SUMMARY

Embodiments of the present application provide methods and apparatuses for channel state information processing, to solve a problem in the related art that a large quantity of artificial intelligence (AI) models need to be deployed for channel state information processing, which causes that model training and deployment waste a large quantity of resources, and to reduce complexity of training an AI model and save deployment resources for the AI model.

An embodiment of the present application provides a method for channel state information processing, performed by a terminal, including:

inputting channel state information to an encoder model to obtain expanded and enhanced channel state information output from the encoder model; and

transmitting the expanded and enhanced channel state information to a network device,

where the encoder model includes an encoder and a channel state information expansion and enhancement block cascaded with the encoder.

In an embodiment, the channel state information expansion and enhancement block includes a downsampling block,

where the downsampling block is cascaded at an output side of the encoder, and is used for compressing a feedback overhead of the channel state information to obtain a compressed feedback overhead,

where the expanded and enhanced channel state information includes the compressed feedback overhead.

In an embodiment, the channel state information expansion and enhancement block includes a pre-transformation block,
where the pre-transformation block is cascaded at an input side of the encoder, and is used for performing at least one of the following:

adjusting probability distributions of channel state information of different multiple-input multiple-output (MIMO) layers to obtain channel state information of different MIMO layers with a unified probability distribution and a unified dimension; or

adjusting probability distributions and/or dimensions of channel state information of different multiple-input multiple-output (MIMO) ports to obtain channel state information of different MIMO ports with unified probability distributions and dimensions,

where the expanded and enhanced channel state information includes the channel state information of different MIMO layers with unified probability distributions and dimensions and/or the channel state information of different MIMO ports with unified probability distributions and dimensions.

In an embodiment, the channel state information expansion and enhancement block includes a subband filling block,

where the subband filling block is cascaded at an input side of the encoder, and is used for filling a number of subbands of the channel state information to obtain channel state information subjected to subband filling,

where the expanded and enhanced channel state information includes the channel state information subjected to subband filling.

In an embodiment, the downsampling block includes any one of the following configurations:

the downsampling block is a pooling layer;

the downsampling block is a fully connected layer with an input dimension greater than an output dimension; or

the downsampling block is a convolutional downsampling layer.

In an embodiment, an output dimension of the downsampling block is determined based on a type of the feedback overhead and a predetermined number of quantization bits.
In an embodiment, the pre-transformation block includes any one of the following configurations:

the pre-transformation block is an identity transformation layer;

the pre-transformation block adopts one fully connected layer in a spatial domain and a frequency domain respectively;

the pre-transformation block adopts one 2-dimensional convolutional layer in a spatial domain and a frequency domain;

the pre-transformation block adopts one fully connected layer in a combined dimension of a spatial domain and a frequency domain;

the pre-transformation block adopts one 1-dimensional convolutional layer in a combined dimension of a spatial domain and a frequency domain;

the pre-transformation block adopts one fully connected layer in a spatial domain; or

the pre-transformation block adopts one 1-dimensional convolutional layer in a spatial domain.

In an embodiment, the subband filling block is specifically used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model,

where the periodic cycle filling includes: copying each subband in sequence based on a sorting order of each subband in the group.

An embodiment of the present application further provides a method for channel state information processing, performed by a network device, including:

receiving expanded and enhanced channel state information transmitted from a terminal; and

inputting the expanded and enhanced channel state information to a decoder model to obtain restored channel state information output from the decoder model,

where the decoder model includes a decoder, and a channel state information restoration block cascaded with the decoder.

In an embodiment, the expanded and enhanced channel state information includes a compressed feedback overhead; and the channel state information restoration block includes an upsampling block,
where the upsampling block is cascaded at an input side of the decoder, and is used for restoring the compressed feedback overhead to obtain a restored feedback overhead.
In an embodiment, the expanded and enhanced channel state information includes channel state information of different multiple-input multiple-output (MIMO) layers with unified probability distributions and dimensions and/or channel state information of different multiple-input multiple-output (MIMO) ports with unified probability distributions and dimensions; and the channel state information restoration block includes a transformation block,
where the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or

performing probability distribution and dimension restoration on the channel state information of different MIMO ports with unified probability distributions and dimensions to obtain channel state information of different MIMO ports with an original probability distribution and an original dimension.

In an embodiment, the expanded and enhanced channel state information includes channel state information subjected to subband filling; and the channel state information restoration block includes a subband clipping block,
where the subband clipping block is cascaded at an output side of the decoder, and is used for clipping and/or combining the channel state information subjected to subband filling to obtain channel state information of an original number of subbands.
In an embodiment, the upsampling block includes any one of the following configurations:

the upsampling block is a neighbor interpolation layer;

the upsampling block is a fully connected layer with an input dimension smaller than an output dimension; or

the upsampling block is a transposed convolutional upsampling layer.

In an embodiment, an input dimension of the upsampling block is determined based on a type of the feedback overhead and a predetermined number of quantization bits.
In an embodiment, the transformation block includes any one of the following configurations:

the transformation block is an identity transformation layer;

the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

In an embodiment, the subband clipping block is specifically used for:
clipping and/or combining subbands in a subband group which have been subjected to subband periodic cycle.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing the following operations:

inputting channel state information to an encoder model to obtain expanded and enhanced channel state information output from the encoder model; and

transmitting the expanded and enhanced channel state information to a network device,

where the encoder model includes an encoder and a channel state information expansion and enhancement block cascaded with the encoder.

In an embodiment, the channel state information expansion and enhancement block includes a downsampling block,

where the downsampling block is cascaded at an output side of the encoder, and is used for compressing a feedback overhead of the channel state information to obtain a compressed feedback overhead,
where the expanded and enhanced channel state information includes the compressed feedback overhead.

In an embodiment, the channel state information expansion and enhancement block includes a pre-transformation block,
where the pre-transformation block is cascaded at an input side of the encoder, and is used for performing at least one of the following:

adjusting probability distributions of channel state information of different multiple-input multiple-output (MIMO) layers to obtain channel state information of different MIMO layers with a unified probability distribution and a unified dimension; or

adjusting probability distributions and/or dimensions of channel state information of different multiple-input multiple-output (MIMO) ports to obtain channel state information of different MIMO ports with unified probability distributions and dimensions,

where the expanded and enhanced channel state information includes the channel state information of different MIMO layers with unified probability distributions and dimensions and/or the channel state information of different MIMO ports with unified probability distributions and dimensions.

In an embodiment, the channel state information expansion and enhancement block includes a subband filling block,

where the subband filling block is cascaded at an input side of the encoder, and is used for filling a number of subbands of the channel state information to obtain channel state information subjected to subband filling,

where the expanded and enhanced channel state information includes the channel state information subjected to subband filling.

In an embodiment, the downsampling block includes any one of the following configurations:

the downsampling block is a pooling layer;

the downsampling block is a fully connected layer with an input dimension greater than an output dimension; or

the downsampling block is a convolutional downsampling layer.

In an embodiment, an output dimension of the downsampling block is determined based on a type of the feedback overhead and a predetermined number of quantization bits.

In an embodiment, the pre-transformation block includes any one of the following configurations:

the pre-transformation block is an identity transformation layer;

the pre-transformation block adopts one fully connected layer in a spatial domain and a frequency domain respectively;

the pre-transformation block adopts one 2-dimensional convolutional layer in a spatial domain and a frequency domain;

the pre-transformation block adopts one fully connected layer in a combined dimension of a spatial domain and a frequency domain;

the pre-transformation block adopts one 1-dimensional convolutional layer in a combined dimension of a spatial domain and a frequency domain;

the pre-transformation block adopts one fully connected layer in a spatial domain; or

the pre-transformation block adopts one 1-dimensional convolutional layer in a spatial domain.

In an embodiment, the subband filling block is specifically used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model,

where the periodic cycle filling includes: copying each subband in sequence based on a sorting order of each subband in the group.

An embodiment of the present application further provides a network device, including a memory, a transceiver and a processor,
where the memory is used for storing a computer program, the transceiver is used for receiving and transmitting data under control of the processor, and the processor is used for reading the computer program in the memory and performing the following operations:

receiving expanded and enhanced channel state information transmitted from a terminal; and

inputting the expanded and enhanced channel state information to a decoder model to obtain restored channel state information output from the decoder model,

where the decoder model includes a decoder, and a channel state information restoration block cascaded with the decoder.

In an embodiment, the expanded and enhanced channel state information includes a compressed feedback overhead; and the channel state information restoration block includes an upsampling block,
where the upsampling block is cascaded at an input side of the decoder, and is used for restoring the compressed feedback overhead to obtain a restored feedback overhead.

In an embodiment, the expanded and enhanced channel state information includes channel state information of different multiple-input multiple-output (MIMO) layers with unified probability distributions and dimensions and/or channel state information of different multiple-input multiple-output (MIMO) ports with unified probability distributions and dimensions; and the channel state information restoration block includes a transformation block,
where the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or

performing probability distribution and dimension restoration on the channel state information of different MIMO ports with unified probability distributions and dimensions to obtain channel state information of different MIMO ports with an original probability distribution and an original dimension.

In an embodiment, the expanded and enhanced channel state information includes channel state information subjected to subband filling; and the channel state information restoration block includes a subband clipping block,
where the subband clipping block is cascaded at an output side of the decoder, and is used for clipping and/or combining the channel state information subjected to subband filling to obtain channel state information of an original number of subbands.

In an embodiment, the upsampling block includes any one of the following configurations:

the upsampling block is a neighbor interpolation layer;

the upsampling block is a fully connected layer with an input dimension smaller than an output dimension; or

the upsampling block is a transposed convolutional upsampling layer.

In an embodiment, an input dimension of the upsampling block is determined based on a type of the feedback overhead and a predetermined number of quantization bits.

In an embodiment, the transformation block includes any one of the following configurations:

the transformation block is an identity transformation layer;

the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

In an embodiment, the subband clipping block is specifically used for:
clipping and/or combining subbands in a subband group which have been subjected to subband periodic cycle.

An embodiment of the present application further provides an apparatus for channel state information processing, for use in a terminal, including:

an enhancing module, used for inputting channel state information to an encoder model to obtain expanded and enhanced channel state information output from the encoder model; and

a transmitting module, used for transmitting the expanded and enhanced channel state information to a network device,

where the encoder model includes an encoder and a channel state information expansion and enhancement block cascaded with the encoder.

An embodiment of the present application further provides an apparatus for channel state information processing, for use in a network device, including:

a receiving module, used for receiving expanded and enhanced channel state information transmitted from a terminal; and

a restoring module, used for inputting the expanded and enhanced channel state information to a decoder model to obtain restored channel state information output from the decoder model,

where the decoder model includes a decoder, and a channel state information restoration block cascaded with the decoder.

An embodiment of the present application further provides a processor-readable storage medium, where the processor-readable storage medium stores a computer program, and the computer program is used to cause a processor to perform the methods described above.

In the methods and apparatuses for channel state information processing provided by the embodiments of the present application, an AI model is expanded and enhanced by cascading the channel state information expansion and enhancement block at the input side and/or the output side of the encoder model. The AI model may be reused under different parameter configurations, thereby reducing complexity of training the AI model and saving deployment resources for the AI model.

BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a schematic structural diagram of an auto encoder in the related art;

FIG. 2 is a schematic flowchart of an artificial intelligence (AI)-based channel state information compression feedback solution in the related art;

FIG. 3 is a first schematic flowchart of a method for channel state information processing according to an embodiment of the present application;

FIG. 4 is a schematic structural diagram of a downsampling block-upsampling block pair according to an embodiment of the present application;

FIG. 5 is a schematic structural diagram of a pre-transformation block-transformation block pair according to an embodiment of the present application;

FIG. 6 is a schematic structural diagram of cascading a subband filling block and a subband clipping block according to an embodiment of the present application;

FIG. 7 is a second schematic flowchart of a method for channel state information processing according to an embodiment of the present application;

FIG. 8 is a first structural diagram of an example of applying a method for channel state information processing according to an embodiment of the present application;

FIG. 9 is a second structural diagram of an example of a method for channel state information processing according to an embodiment of the present application;

FIG. 10 is a third structural diagram of an example of a method for channel state information processing according to an embodiment of the present application;

FIG. 11 is a fourth structural diagram of an example of a method for channel state information processing according to an embodiment of the present application;

FIG. 12 is a fifth structural diagram of an example of applying a method for channel state information processing according to an embodiment of the present application;

FIG. 13 is a schematic structural diagram of a terminal according to an embodiment of the present application;

FIG. 14 is a schematic structural diagram of a network device according to an embodiment of the present application;

FIG. 15 is a first structural schematic diagram of an apparatus for channel state information processing according to an embodiment of the present application; and

FIG. 16 is a second structural schematic diagram of an apparatus for channel state information processing according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

Solutions of embodiments of the present application will be clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Embodiments of the present application provide methods and apparatuses for channel state information processing, to solve a problem in the related art that a large number of artificial intelligence (AI) models need to be deployed for channel state information processing, which causes that model training and deployment waste a large number of resources.

The methods and the apparatuses are based on the same application concept. Since principles of the methods and the apparatuses to solve the problem are similar, implementations of the apparatuses and the methods may be referred to each other, and repeated details will not be repeated.

In order to fully understand solutions of the present application, the following content is introduced.

In massive multiple-input multiple-output (MIMO) systems, an artificial intelligence (AI)-based neural network model may be used for channel state information feedback. By taking advantage of sparsity of channel state information in a spatial domain and a frequency domain, the neural network model may use an encoder block of an auto encoder (AE) for compressing channel state information to reduce a feedback overhead, and then use a decoder block of the AE to recover channel state information.

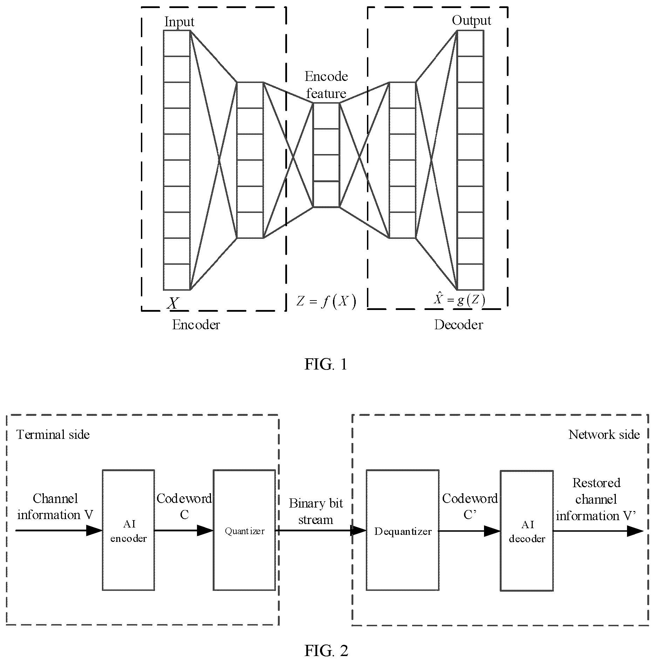

An auto encoder is a neural network with same input and output, and is consisted of an encoder and a decoder. The encoder compresses input data into a latent space representation, and the decoder reconstructs input based on this representation. A structure of the auto encoder is as shown in FIG. 1. Input data X is first compressed into a coding feature $Z = f(X)$ by the encoder, then the coding feature Z passes through the decoder, and $\hat{X} = g(Z) = g(f(X))$ is obtained, which aims to reconstruct the input data X. The auto encoder solves a mapping relationship between $f(\cdot)$ and $g(\cdot)$ through back-propagation training to minimize a reconstruction error $L(\hat{X}, X)$. The encoder block and the decoder block may be constructed using convolutional neural networks, fully connected neural networks, recurrent neural networks, etc. or a combination thereof. When the auto encoder is applied to a channel state information compression feedback, a dimension of output Z of the encoder is smaller than a dimension of input X of the encoder. The smaller the dimension of the output Z, the higher a compression rate, and accordingly, the greater an error of the decoder in recovering the channel state information.

Currently, in an AI-based channel state information compression feedback solution, an AI model is usually design under a given feedback overhead, a given number of MIMO layer, a given number of MIMO ports or a given number of subbands. As shown in FIG. 2, a terminal side inputs channel state information V to an AI encoder to obtain a compressed codeword C (an information length of the codeword C is much smaller than a length of the input V), then inputs the codeword C into a quantizer, inputs a quantized binary bit stream into a dequantizer to obtain the codeword C' with a quantization error, and finally inputs C' into the decoder block to obtain restored channel information V'. In case that multiple network configuration hyperparameters exists, in a traditional solution, multiple sets of AI models need to be trained, which will increase a complexity of training the AI models and a storage overhead for the AI models. Taking 8 types of feedback overhead, 4 layers of MIMO, and 8 types of ports as an example, a network layer and a terminal need to train and deploy one AI model for $8 \times 4 \times 8 = 256$ parameter configurations separately, which brings challenges for training models and storing models.

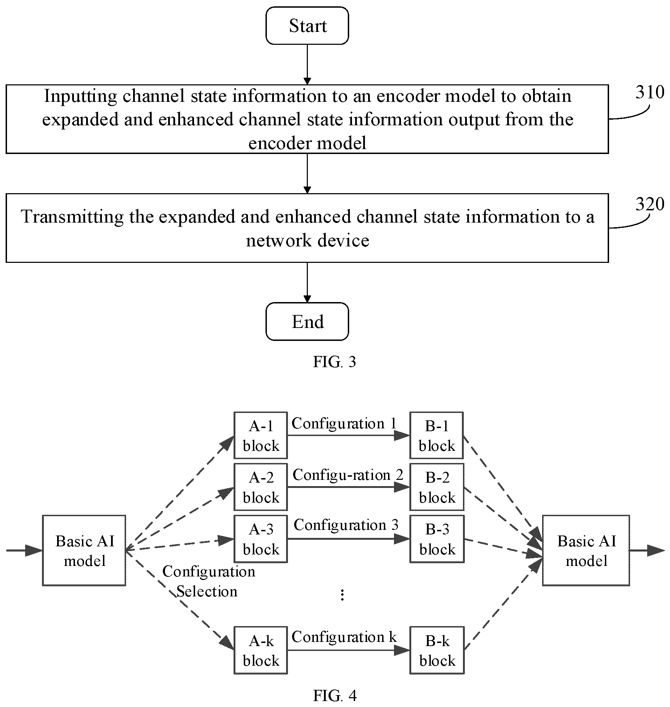

FIG. 3 is a first schematic flowchart of a method for channel state information processing according to an embodiment of the present application. As shown in FIG. 3, an embodiment of the present application provides a method for channel state information processing, which is performed by a terminal, such as a mobile phone. The method includes the following steps.

Step 310: inputting channel state information to an encoder model to obtain expanded and enhanced channel state information output from the encoder model.

Step 320: transmitting the expanded and enhanced channel state information to a network device.

The encoder model includes an encoder and a channel state information expansion and enhancement block cascaded with the encoder.

It should be noted that an AI model performing CSI compression feedback may be used as a basic AI model. An encoder of the basic AI model is deployed at the terminal to form an encoder model, and a decoder of the basic AI model is deployed at a network device to form the decoder model. At the same time, multiple pairs of AI modules are cascaded to an inside of the basic AI model (an output side of the encoder, and an input side of the decoder) and/or an outside of the basic AI model (an input side of the encoder, and an output side of the decoder) to expand and enhance the basic AI model. Therefore, the basic AI model may be reused under different parameter configurations.

In step 310, the terminal may input the channel state information into the encoder model. The input side or the output side of the encoder is cascaded with a channel state information expansion and enhancement block, respectively. The channel state information expansion and enhancement block may expand and enhance the basic AI model in different ways.

For example, expanding and enhancing the basic AI model may include compressing the feedback overhead of the channel state information, adjusting probability distributions of channel state information of different MIMO layers and/or probability distributions of channel state information of different MIMO ports, filling in a number of subbands of the channel state information, etc.

After performing the above the channel state information processing, the terminal would transmit the expanded and enhanced channel state information to the network device, so that the decoder model deployed at the network device may process the expanded and enhanced channel state information accordingly, such as restoring the compressed feedback overhead, restoring the probability distributions of the channel state information of different MIMO layers and/or the probability distributions of the channel state information of different MIMO ports with uniform probability distributions, clipping and/or combining the channel state information subjected to subband filling, etc.

In the method for channel state information processing provided by the embodiment of the present application, the AI model is expanded and enhanced by cascading the channel state information expansion and enhancement block at the input side and/or the output side of the encoder model. The AI model may be reused under different parameter configurations, thereby reducing complexity of training the AI model and saving deployment resources for the AI model.

In an embodiment, the channel state information expansion and enhancement block includes a downsampling block,

where the downsampling block is cascaded at an output side of the encoder, and is used for compressing a feedback overhead of the channel state information to obtain a compressed feedback overhead,

where the expanded and enhanced channel state information includes the compressed feedback overhead.

For the CSI compression feedback solution, a network parameter configuration is required to support different feedback overheads. In this case, an output of the encoder of the AI model and an input of the decoder of the AI model need to support multiple dimensions to achieve different feedback overheads. Under a condition of a given feedback overhead and a given quantization order, an output dimension of the encoder (an input dimension of the decoder) may be determined, and a basic AI model with a given feedback overhead may be trained.

In order to achieve different feedback overheads, at least one downsampling block A-k and upsampling block B-k pair may be cascaded at the inside of the basic AI model (the output side of the encoder and the input side of the decoder) to expand and enhance the feedback overhead, as shown in FIG. 4 Show. The expanded basic AI model has k branches, and each branch corresponds to a feedback overhead configuration.

In an embodiment, the downsampling block includes any one of the following configurations:

the downsampling block is a pooling layer;

the downsampling block is a fully connected layer with an input dimension greater than an output dimension; or

the downsampling block is a convolutional downsampling layer.

In order to reduce complexity, the downsampling block A-k and the upsampling block B-k should not be designed to be too complex, and any one of the following configurations may be adopted:

configuration 1: A-k is a pooling layer, and B-k is a neighbor interpolation layer;

configuration 2: A-k is a fully connected layer with an input dimension greater than an output dimension, and B-k is a fully connected layer with an input dimension smaller than an output dimension; or

configuration 3: A-k is a convolutional downsampling layer (a convolutional layer with a sliding step larger than 1), and B-k is a transposed convolutional upsampling layer.

An output dimension of A-k (the input dimension of B-k) is $n_k = n_{payload,k}/q$, where k=1,2,3, ..., q is a number of quantization bits, $n_{payload}$, k is k feedback overheads configured by a network.

Optionally, the basic AI model may be a CSI compression feedback AI model under a given feedback overhead. The downsampling block A-k and the upsampling block B-k further downsample and compress based on the basic AI model, to obtain a variety of lower Feedback overhead $n_{payload,k}$.

The basic AI model may also be an AI transformation-inverse transformation pair without dimensional compression (that is, the output dimension of the encoder of the basic AI model is equal to the input dimension of the encoder of the basic AI model), and the dimension compression is completely performed through the downsampling block A-k and the upsampling block B-k.

In the method for channel state information processing provided by the embodiment of the present application, the CSI feedback overhead may be expanded and enhanced using the AI model by cascading the downsampling block at the output side of the encoder. Therefore, the AI model may be reused under different feedback overhead configurations, which may reduce the complexity of training the AI model training and save deployment resources for the AI model.

In an embodiment, the channel state information expansion and enhancement block includes a pre-transformation block,
where the pre-transformation block is cascaded at an input side of the encoder, and is used for performing at least one of the following:

adjusting probability distributions of channel state information of different multiple-input multiple-output (MIMO) layers to obtain channel state information of different MIMO layers with a unified probability distribution and a unified dimension; or

adjusting probability distributions and/or dimensions of channel state information of different multiple-input multiple-output (MIMO) ports to obtain channel state information of different MIMO ports with unified probability distributions and dimensions, where the expanded and enhanced channel state information includes the channel state information of different MIMO layers with unified probability distributions and dimensions and/or the channel state information of different MIMO ports with unified probability distributions and dimensions.

For the CSI compression feedback solution, the network parameter configuration is required to support different numbers of MIMO layers and different numbers of ports. For different numbers of ports, the input and output of the basic AI model (encoder + decoder) need to support multiple dimensions. In addition, input probability distributions of the basic AI model under different configurations must also be unified or close to each other, to make the basic AI model work at its best. In other words, CSI data probability distributions of different ports and CSI data probability distributions of different MIMO layers are inconsistent, and need to be transformed into a unified probability distribution.

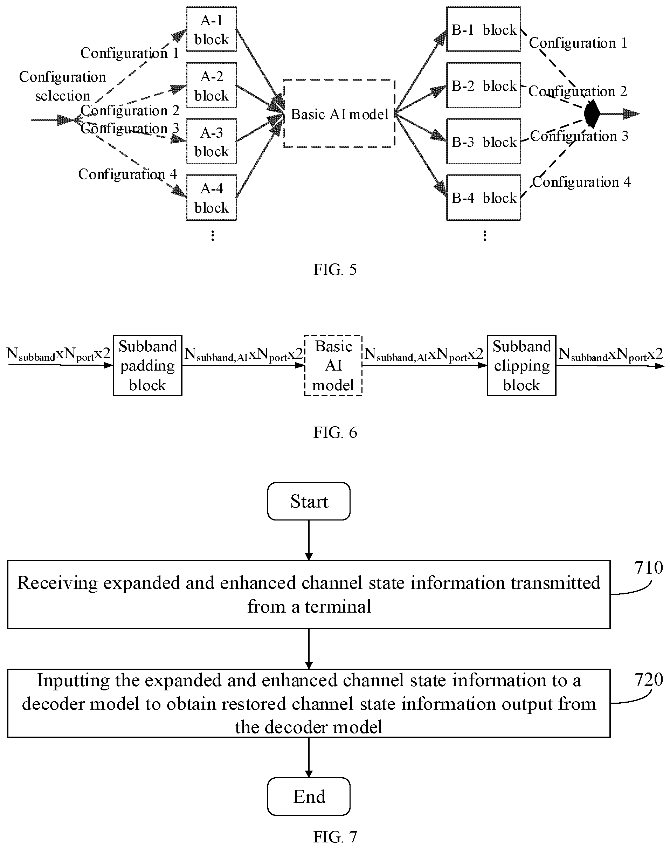

As shown in FIG. 5, by cascading an A-k pre-transformation/B-k transformation block pair outside the basic AI model (the input side of the encoder and the output side of the decoder), input probability distributions and/or input dimensions are aligned under different configurations.

In an embodiment, the pre-transformation block includes any one of the following configurations:

the pre-transformation block is an identity transformation layer;

the pre-transformation block adopts one fully connected layer in a spatial domain and a frequency domain respectively;

the pre-transformation block adopts one 2-dimensional convolutional layer in a spatial domain and a frequency domain;

the pre-transformation block adopts one fully connected layer in a combined dimension of a spatial domain and a frequency domain;

the pre-transformation block adopts one 1-dimensional convolutional layer in a combined dimension of a spatial domain and a frequency domain;

the pre-transformation block adopts one fully connected layer in a spatial domain; or

the pre-transformation block adopts one 1-dimensional convolutional layer in a spatial domain.

For expansion and enhancement of the MIMO layer of the basic AI model, the A-k pre-transformation/B-k transformation block pair functions as distribution transformation.

Specifically, the A-1/B-1 block is an identity transformation (an input being equal to an output), the basic AI model is an AI model suitable for layer 1, A-k (where k=2, 3, 4...) makes a CSI probability distribution of layer k be close to a CSI probability distribution of layer 1 through pre-transformation, and B-k transforms restored CSI of layer k back to an original distribution.

The A-k pre-transformation/B-k transformation block pair may include any one of the following configurations:

a spatial domain-frequency domain two-dimensional linear transformation, that is, one fully connected layer is adopted respectively in a spatial domain and a frequency domain, or one 2-dimensional convolution/transposed convolution is adopted as a whole; or

a spatial domain-frequency domain is stretched to 1 dimension, that is, one fully connected layer or 1-dimensional convolution is adopted.

For expansion and enhancement of a port of the basic AI model, the A-k pre-transformation/B-k transformation block pair functions as probability distribution matching and dimension unification. CSI inputs of different ports are transformed to a unified number of ports.

In particular, an A-1/B-1 block is an identity transformation (an input being equal to an output), the basic AI model is an AI model suitable for Port_Max, A-k (where k=2, 3, 4...) makes CSI of k ports (k<Port_Max) be transformed into CSI of a Port_Max port through pre-transformation, and B-k transforms restored CSI from Port_Max back to an original port k.

The A-k pre-transformation/B-k transformation block pair may include any one of the following configurations:

adopting one fully connected layer in a spatial domain; or

adopting a 1-dimensional layer in a spatial domain.

In the method for channel state information processing provided by the embodiment of the present application, MIMO layers and/or MIMO ports may be expanded and enhanced using the AI model by cascading the pre-transformation block at the input side of the encoder. Therefore, the AI model may be reused at different MIMO layers, or under different port configurations, which may reduce the complexity of training the AI model training and save deployment resources for the AI model.

In an embodiment, the channel state information expansion and enhancement block includes a subband filling block,

where the subband filling block is cascaded at an input side of the encoder, and is used for filling a number of subbands of the channel state information to obtain channel state information subjected to subband filling,

where the expanded and enhanced channel state information includes the channel state information subjected to subband filling.

For the CSI compression feedback solution, the network parameter configuration is required to support different quantities $N_{subband}$ of subbands, and a number $N_{subband,AI}$ of subbands input by the basic AI module used for CSI compression feedback is usually given. As shown in FIG. 6, in order to expand and enhance the number of subbands, in the embodiment of the present application, a subband filling block and a subband clipping block are cascaded outside the basic AI module (the input side of the encoder and the output side of the decoder).

In an embodiment, the subband filling block is specifically used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model,

where the periodic cycle filling includes: copying each subband in sequence based on a sorting order of each subband in the group.

After the subband filling block and the subband clipping block are cascaded outside the basic AI module (the input side of the encoder and the output side of the decoder), the subband filling block and the subband clipping block perform filling and clipping by adopting CSI taking $N_{subband,AI}$ subbands as a group of inputs, respectively.

In case that $0 = N_{subband}$ mod $N_{subband,AI}$, the CSI may be divided into $N_{subband}/N_{subband,AI}$ groups. Each group is transmitted to a basic AI network to perform CSI compression feedback. The subband filling block and subband clipping block do not need to perform additional processing on the input.

In case that $0 \neq N_{subband}$ mod $N_{subband,AI}$, a number of subbands $N_{subband}$ mod $N_{subband,AI}$ of a last group of CSI subbands is lower than $N_{subband,AI}$, the subband filling block would performing periodic cycle padding on group members including $N_{subband}$ mod $N_{subband,AI}$ subbands into $N_{subband,AI}$ subbands, and then transmit them to the basic AI model. The subband clipping block would clip or combine the subbands on which periodic cycle filling is performed to obtain CSI with original $N_{subband}$ mod $N_{subband,AI}$ subbands.

Performing periodic cycle filling on group A = [A$_1$A$_2$A$_3$, ... A$_K$] including K subbands to be group B including N subbands refers to that:

$$B = [A_1 A_2 A_3, ... A_K \ A_{K-1} A_{K-2} A_{K-3}, ... A_1 \ A_2 A_3 A_4, ... A_K A_{K-1} ...].$$

This operation may simulate frequency domain correlation to the greatest extent, thereby improving CSI compression feedback performance.

In the method for channel state information processing provided by the embodiment of the present application, the number of subbands may be expanded and enhanced using the AI model by cascading the subband filling block at the input side of the encoder. Therefore, the AI model may be reused under different feedback overhead configurations, which may reduce the complexity of training the AI model training and save deployment resources for the AI model.

FIG. 7 is a second schematic flowchart of a method for channel state information processing according to an embodiment of the present application. As shown in FIG. 7, an embodiment of the present application provides a method for channel state information processing, which is performed by a network device, such as a base station. The method includes the following steps.

Step 710: receiving expanded and enhanced channel state information transmitted from a terminal.

Step 720: inputting the expanded and enhanced channel state information to a decoder model to obtain restored channel state information output from the decoder model.

The decoder model includes a decoder, and a channel state information restoration block cascaded with the decoder.

It should be noted that an AI model performing CSI compression feedback may be used as a basic AI model. An encoder of the basic AI model is deployed at the terminal to form an encoder model, and a decoder of the basic AI model is deployed at a network device to form the decoder model. At the same time, multiple pairs of AI modules are cascaded to an inside of the basic AI model (tan output side of the encoder, and an input side of the decoder) and/or an outside of the basic AI model (an input side of the encoder, and an output side of the decoder) to expand and enhance the basic AI model.

Therefore, the basic AI model may be reused under different parameter configurations.

In step 710, the network device may receive the expanded and enhanced channel state information transmitted from the terminal.

It should be noted that the terminal may input channel state information into the encoder model. The input side or the output side of the encoder is cascaded with a channel state information expansion and enhancement block. The channel state information expansion and enhancement block may expand and enhance the AI basic model in different ways.

For example, expanding and enhancing the basic AI model may include compressing the feedback overhead of the channel state information, adjusting probability distributions of channel state information of different MIMO layers and/or probability distributions of channel state information of different MIMO ports, filling in a number of subbands of the channel state information, etc.

After performing the above channel state information processing, the terminal would transmit the expanded and enhanced channel state information to the network device. After receiving the expanded and enhanced channel state information, the network device would input the expanded and enhanced channel state information into the decoder model, and restore the extended and enhanced channel state information based on the channel state information restoration block cascaded with the decoder, such as restoring the compressed feedback overhead, restoring the probability distributions of the channel state information of different MIMO layers and/or the probability distributions of the channel state information of different MIMO ports with uniform probability distributions, clipping and/or combining the channel state information subjected to subband filling, etc.

In the method for channel state information processing provided by the embodiments of the present application, the extended and enhanced channel state information is restored by cascading the channel state information restoration block at the input side and/or the output side of the decoder model. The AI model may be reused under different parameter configurations, thereby reducing complexity of training the AI model and saving deployment resources for the AI model.

In an embodiment, the expanded and enhanced channel state information includes a compressed feedback overhead; and the channel state information restoration block includes an upsampling block, where the upsampling block is cascaded at an input side of the decoder, and is used for restoring the compressed feedback overhead to obtain a restored feedback overhead.

For the CSI compression feedback solution, a network parameter configuration is required to support different feedback overheads. In this case, an output of the encoder of the AI model and an input of the decoder of the AI model need to support multiple dimensions to achieve different feedback overheads. Under a condition of a given feedback overhead and a given quantization order, an output dimension of the encoder (an input dimension of the decoder) may be determined, and a basic AI model with a given feedback overhead may be trained.

In order to achieve different feedback overheads, at least one downsampling block A-k and upsampling block B-k pair may be cascaded at the inside of the basic AI model (the output side of the encoder and the input side of the decoder) to expand and enhance the feedback overhead, as shown in FIG. 4 Show. The expanded basic AI model has k branches, and each branch corresponds to a feedback overhead configuration.

In an embodiment, the upsampling block includes any one of the following configurations:

the upsampling block is a neighbor interpolation layer;

the upsampling block is a fully connected layer with an input dimension smaller than an output dimension; or

the upsampling block is a transposed convolutional upsampling layer.

In order to reduce complexity, the downsampling block A-k and the upsampling block B-k should not be designed to be too complex, and any one of the following configurations may be adopted:

configuration 1: A-k is a pooling layer, and B-k is a neighbor interpolation layer;

configuration 2: A-k is a fully connected layer with an input dimension greater than an output dimension, and B-k is a fully connected layer with an input dimension smaller than an output dimension; or

configuration 3: A-k is a convolutional downsampling layer (a convolutional layer with a sliding step larger than 1), and B-k is a transposed convolutional upsampling layer.

An output dimension of A-k (the input dimension of B-k) is $n_k = n_{payload,k}/q$, where k=1,2,3, ..., q is a number of quantization bits, $n_{payload}$, k is k feedback overheads configured by a network.

Optionally, the basic AI model may be a CSI compression feedback AI model under a given feedback overhead.

The downsampling block A-k and the upsampling block B-k further downsample and compress based on the basic AI model, to obtain multiple reduced feedback overheads $n_{payload,k}$.

The basic AI model may also be a AI transformation-inverse transformation pair without dimensional compression (that is, the output dimension of the encoder of the basic AI model is equal to the input dimension of the encoder of the basic AI model), and the dimensional compression is completely performed through the downsampling block A-k and the upsampling block B-k.

In the method for channel state information processing provided by the embodiments of the present application, the CSI feedback overhead may be expanded and enhanced using the AI model by cascading the upsampling block at the input side of the decoder. Therefore, the AI model may be reused under different feedback overhead configurations, which may reduce the complexity of training the AI model training and save deployment resources for the AI model.

In an embodiment, the expanded and enhanced channel state information includes channel state information of different multiple-input multiple-output (MIMO) layers with unified probability distributions and dimensions and/or channel state information of different multiple-input multiple-output (MIMO) ports with unified probability distributions and dimensions; and the channel state information restoration block includes a transformation block,

where the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or

performing probability distribution and dimension restoration on the channel state information of different MIMO ports with unified probability distributions and dimensions to obtain channel state information of different MIMO ports with an original probability distribution and an original dimension.

For the CSI compression feedback solution, the network parameter configuration is required to support different numbers of MIMO layers and different numbers of ports. For different numbers of ports, the input and output of the basic AI model (encoder + decoder) need to support multiple dimensions. In addition, input probability distributions of the basic AI model under different configurations must also be unified or close to each other, to make the basic AI model work at its best. In other words, CSI data probability distributions of different ports and CSI data probability distributions of different MIMO layers are inconsistent, and need to be transformed into a unified probability distribution.

As shown in FIG. 5, by cascading an A-k pre-transformation/B-k transformation block pair outside the basic AI model (the input side of the encoder and the output side of the decoder), input probability distributions and/or input dimensions are aligned under different configurations.

In an embodiment, the transformation block includes any one of the following configurations:

the transformation block is an identity transformation layer;

the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

For expansion and enhancement of the MIMO layer of the basic AI model, the A-k pre-transformation/B-k transformation block pair functions as distribution transformation.

Specifically, the A-1/B-1 block is an identity transformation (an input being equal to an output), the basic AI model is an AI model suitable for layer 1, A-k (where k=2, 3, 4...) makes a CSI probability distribution of layer k be close to a CSI probability distribution of layer 1 through pre-transformation, and B-k transforms restored CSI of layer k back to an original distribution.

The A-k pre-transformation/B-k transformation block pair may include any one of the following configurations:

a spatial domain-frequency domain two-dimensional linear transformation, that is, one fully connected layer is adopted respectively in a spatial domain and a frequency domain, or one 2-dimensional convolution/transposed convolution is adopted as a whole; or

a spatial domain-frequency domain is stretched to 1 dimension, that is, one fully connected layer or 1-dimensional convolution is adopted.

For expansion and enhancement of a port of the basic AI model, the A-k pre-transformation/B-k transformation block pair functions as probability distribution matching and dimension unification. CSI inputs of different ports are transformed to a unified number of ports.

In particular, an A-1/B-1 block is an identity transformation (an input being equal to an output), the basic AI model is an AI model suitable for Port_Max, A-k (where k=2, 3, 4...) makes CSI of k ports (k<Port_Max) be transformed into CSI of a Port_Max port through pre-transformation, and B-k transforms restored CSI from Port_Max back to an original port k.

The A-k pre-transformation/B-k transformation block pair may include any one of the following configurations:

adopting one fully connected layer in a spatial domain; or

adopting a 1-dimensional layer in a spatial domain.

In the method for channel state information processing provided by the embodiment of the present application, MIMO layers and/or MIMO ports may be expanded and enhanced using the AI model by cascading the pre-transformation block at the output side of the decoder. Therefore, the AI model may be reused at different MIMO layers, or under different port configurations, which may reduce the complexity of training the AI model training and save deployment resources for the AI model.

In an embodiment, the expanded and enhanced channel state information includes channel state information subjected to subband filling; and the channel state information restoration block includes a subband clipping block, where the subband clipping block is cascaded at an output side of the decoder, and is used for clipping and/or combining the channel state information subjected to subband filling to obtain channel state information of an original number of subbands.

For the CSI compression feedback solution, the network parameter configuration is required to support different quantities $N_{subband}$ of subbands, and a number $N_{subband,AI}$ of subbands input by the basic AI module used for CSI compression feedback is usually given. As shown in FIG. 6, in order to expand and enhance the number of subbands, in the embodiment of the present application, a subband filling block and a subband clipping block are cascaded outside the basic AI module (the input side of the encoder and the output side of the decoder).

In an embodiment, the subband clipping block is specifically used for: clipping and/or combining subbands in a subband group which have been subjected to subband periodic cycle.

After cascading the subband filling block and the subband clipping block outside the basic AI module (the input side of the encoder and the output side of the decoder), the subband filling block and the subband clipping block perform filling and clipping by adopting CSI taking $N_{subband,AI}$ subbands as a group of inputs, respectively.

In case that $0 = N_{subband} \bmod N_{subband,AI}$, the CSI may be divided into $N_{subband} / N_{subband,AI}$ groups. Each group is transmitted to a basic AI network to perform CSI compression feedback. The subband filling block and subband clipping block do not need to perform additional processing on the input.

In case that $0 \neq N_{subband} \bmod N_{subband,AI}$, a number of subbands $N_{subband} \bmod N_{subband,AI}$ of a last group of CSI subbands is lower than $N_{subband,AI}$, the subband filling block would performing periodic cycle padding on group members including $N_{subband} \bmod N_{subband,AI}$ subbands into $N_{subband,AI}$ subbands, and then transmit them to the basic AI model. The subband clipping block would clip or combine the subbands on which periodic cycle filling is performed to obtain CSI of original $N_{subband} \bmod N_{subband,AI}$ subbands.

Performing periodic cycle filling on group $A = [A_1 A_2 A_3, ... A_K]$ including K subbands to be group B including N subbands refers to that:

$$B = [A_1 A_2 A_3, ... A_K \, A_{K-1} A_{K-2} A_{K-3}, ... A_1 \, A_2 A_3 A_4, ... A_K A_{K-1} ...].$$

This operation may simulate frequency domain correlation to the greatest extent, thereby improving CSI compression feedback performance.

In the method for channel state information processing provided by the embodiments of the present application, the number of subbands may be expanded and enhanced using the AI model by cascading the subband clipping module at the output side of the decoder. Therefore, the AI model may be reused under different feedback overhead configurations, which may reduce the complexity of training the AI model training and save deployment resources for the AI model.

The following introduces several examples of applying the method for channel state information processing provided by the embodiments of the present application.

Example 1 (a CSI compression feedback model with an expandable overhead):

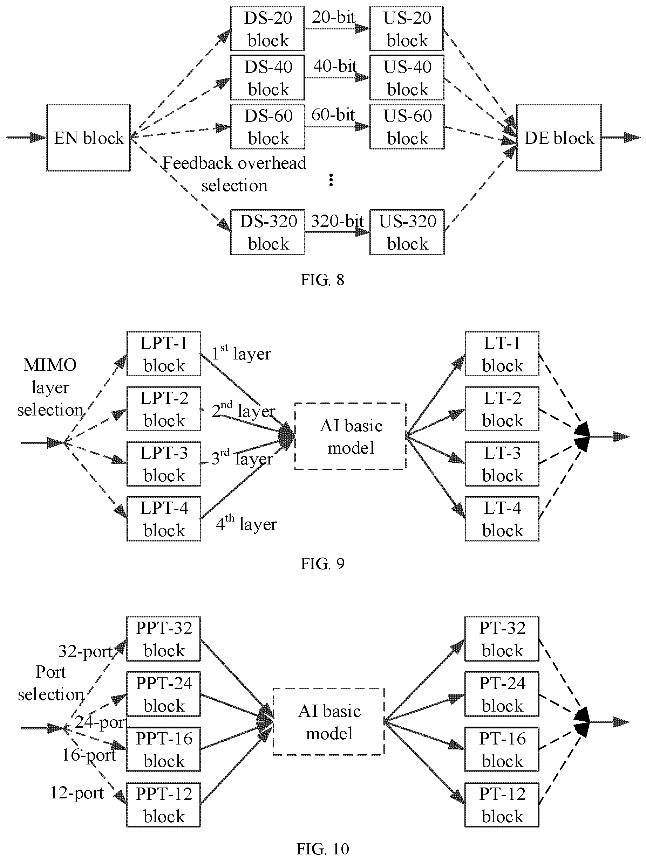

As shown in FIG. 8, an EN block and a DE block are one pre-transformation-transformation pair. By adopting a transformer model, input and output dimensions of the EN block and the DE block are 12*64, and an input precoding matrix indicator (PMI) (precoder vector) corresponds to 12 subbands and 32 ports (a real part and an imaginary part are combined to be 64 dimensions). The trained EN block transforms the PMI into an implicit domain to facilitate downsampling compression, and the DE block transforms the data in the implicit domain back to a spatial frequency domain where the PMI locates. A DS-k block/US-k block is an upsampling-downsampling transformation pair implemented by a fully connected layer. A 2-bit uniform quantizer is cascaded inside the US-k block, and a dequantizer is cascaded inside the DS-k block, where k represents values of a number of bits after quantization being k=20, 40, 60, ..., 320. By internally cascading multiple pairs of DS-k block/US-k block, the basic AI model (EN block + DE block) expands and enhances the feedback overhead.

After the terminal receives a network configuration channel (which includes the feedback overhead, and a user equipment (UE) may also determine the feedback overhead by itself), the terminal selects a DS-k downsampling branch for CSI compression based on the feedback overhead. Similarly, the network device selects a corresponding US-k upsampling branch to perform CSI restoration based on the feedback overhead configured to the terminal or the feedback overhead reported from the terminal.

Example 2 (a CSI compression feedback model with an expandable MIMO layer):

As shown in FIG. 9, a basic AI model is an AE based on a transformer model, which is used for PMI compression and decompression on a feedback overhead of 12 subbands, 32 ports, layer 1, and 240 bits. By cascading an LPT-k block-LT-k block pre-transformation-transformation pair outside the basic AI model (an input side of an encoder and an output side of a decoder), the basic AI model may achieve MIMO multi-layer expansion. LPT-1 block and LT-1 block are all identity transformations where an input is equal to an output, and LPT-k block/LT-k block (where k=2, 3, 4) is a 2-dimensional linear transformation of a spatial domain-frequency domain implemented through 2 fully connected layers. For a PMI corresponding to a k-th layer, a terminal selects a k-th branch for CSI compression, and a network device selects the k-th branch for CSI restoration.

Example 3 (a CSI compression feedback model with an expandable MIMO port):

As shown in FIG. 10, an AI basic model is an AE, which is used for PMI compression and decompression on a feedback overhead of 12 subbands, 32 ports, layer 1, and 240 bits. By cascading a PPT-k block/PT-k block at the outside, the basic AI model realizes MIMO multi-port expansion. A PPT-32 block/PT-32 block is an identity transformation where an input is equal to an output. The PPT-k block/PT-k block (where k=24, 16, 12) is a spatial linear transformation implemented by a fully connected layer. A PMI with an input being $N_{subband,AI} \times (k \times 2)$ dimensions is transformed into a PMI being $N_{subband,AI} \times (32 \times 2)$ dimension, where k is an actual number of PMI ports.

Example 4 (CSI compression feedback model with an expandable number of subbands):

An AI basic model is an AE based on a transformer model, which is used for PMI compression and decompression on a feedback overhead of $N_{subband,AI}$ = 12 subbands, $N_{port}$ = 32 ports, layer 1, and 240 bits. By cascading a subband filling block and a subband clipping block outside the basic AI model (an input side of an encoder and an output side of a decoder), the basic AI model expands a number of subbands. The subband filling block divides a currently input PMI of $N_{subband}$ = 52 subbands in a way of 12 subbands being one group, and 5 groups are divided. For a last group being less than 12 subbands, 8 subbands are cyclically filled in a frequency domain to achieve an AI input of 12 subbands (after filling, subband index numbers are [1,2,3,4,3,2,1,2,3,4,3,2]). The subband clipping block clips a corresponding cyclically filled PMI in the last group to obtain an original PMI.

Example 5 (a CSI compression feedback model with an expandable number of subbands + ports + layers + feedback overhead):

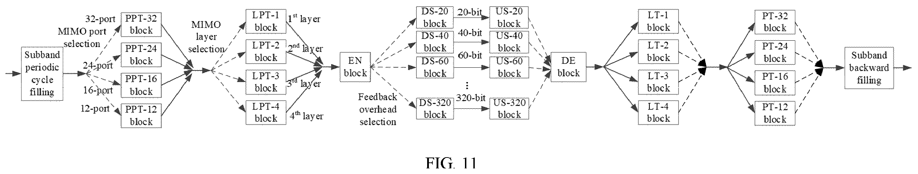

As shown in FIG. 11, a basic AI network composed of an EN block and a DE block transforms and inversely transforms a PMI of 12 subbands, 32 ports, and layer 1. First, the feedback overhead expansion enhancement is performed by cascading a DS-k/US-k inside the basic AI network (an output side of an encoder and an input side of a decoder) through a fully connected layer. Then, an LPT-k/LT-k is cascaded outside the basic AI network (an input side of an encoder, an output side of a decoder) to achieve 4-layer MIMO expansion. An LPT-1/LT-1 is an identity transformation, the LPT-k/LT-k (k=2, 3, 4) is achieved by a two-dimensional linear transformation in a spatial domain and a frequency domain through a fully connected layer. A PPT-k/PT-k is further cascaded outside the basic AI network to achieve {32, 24, 16, 12} port expansion. A PPT-32/ PT-32 is an identity transformation, and a PPT-k/PT-k (where k=24, 16, 12) achieves a spatial linear transformation through a fully connected layer. Finally, subband periodic cycle filling block and subband backward filling block are cascaded outside the basic AI model, to expand and enhance the number of subbands.

Example 6 (a CSI compression feedback model with an expandable number of subbands + ports + feedback overhead, that is, a layer-specified AI model):

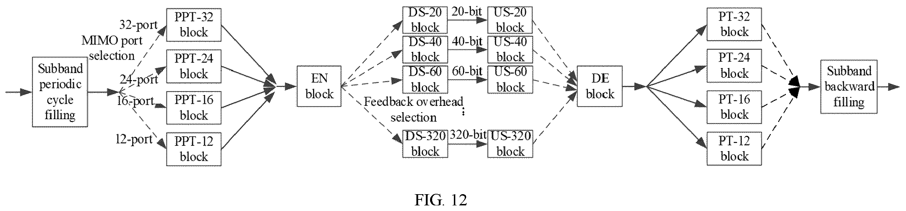

As shown in FIG. 12, a basic AI model composed of an EN block and a DE block transforms and inversely transforms a PMI of 12 subbands, 32 ports, and layer 1. First, a DS-k/US-k is cascaded inside a basic AI network (an output side of an encoder, an output side of a decoder) to expand and enhance the feedback overhead through a fully connected layer. Further a PPT-k/PT-k is cascaded outside the basic AI model (an input side of an encoder, an output side of a decoder) to achieve {32, 24, 16, 12} port expansion. A PPT-32/PT-32 is an identity transformation, and a PPT-k/PT-k (where k=24, 16, 12) achieves a spatial linearity transformation through a fully connected layer. Finally, a subband filling block and a subband clipping block are cascaded outside the basic AI model to expand and enhance the number of subbands, respectively.

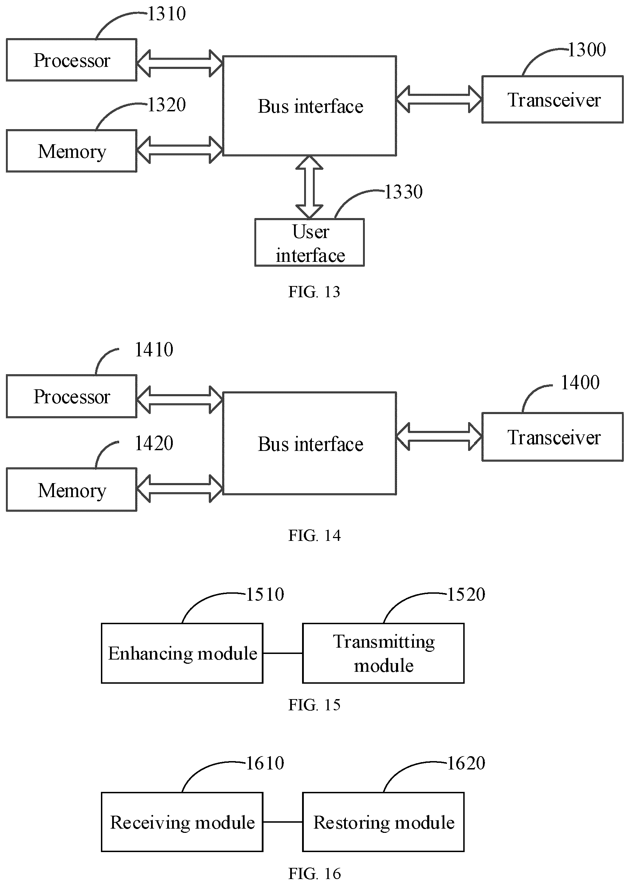

FIG. 13 is a schematic structural diagram of a terminal according to an embodiment of the present application. As shown in FIG. 13, the terminal includes a memory 1320, a transceiver 1300, and a processor 1310.

The memory 1320 is used for storing a computer program, the transceiver 1300 is used for receiving and transmitting data under control of the processor 1310, and the processor 1310 is used for reading the computer program in the memory 1320 and performing the following operations:

inputting channel state information to an encoder model to obtain expanded and enhanced channel state information output from the encoder model; and

transmitting the expanded and enhanced channel state information to a network device,

where the encoder model includes an encoder and a channel state information expansion and enhancement block cascaded with the encoder.

In FIG. 13, a bus architecture may include any number of interconnected buses and bridges, which are linked together through various circuits of one or more processors represented by the processor 1310 and one or more memories represented by the memory 1320. The bus architecture may also link together various other circuits, such as peripherals, voltage regulators, and power management circuits, etc., which are well known in the art, and therefore are not further described in the present application. A bus interface provides an interface. The transceiver 1300 may include multiple elements, i.e., including a transmitter and a receiver, units for providing communication with various other devices over transmission media including wireless channels, wired channels, fiber optic cables, and the like. For different user devices, a user interface 1330 may also be an interface capable of externally or internally connecting required devices, and the connected devices include but are not limited to a small keypad, a display, a speaker, a microphone, a joystick, and the like.

The processor 1310 is responsible for managing the bus architecture and general processing, and the memory 1320 may store data used by the processor 1310 when performing operations.

In some embodiments, the processor 1310 may be a central processing unit (CPU), an application specific integrated circuit (ASIC), a field programmable gate array (FPGA), or a complex programmable logic device (CPLD), and the processor 1310 may also adopt a multi-core architecture.

The processor 1310 calls a computer program stored in the memory to perform any methods provided by the embodiments of the present application based on the obtained executable instructions. The processor 1310 and the memory 1320 can also be arranged physically separately.

In an embodiment, the channel state information expansion and enhancement block includes a downsampling block,

where the downsampling block is cascaded at an output side of the encoder, and is used for compressing a feedback overhead of the channel state information to obtain a compressed feedback overhead,
where the expanded and enhanced channel state information includes the compressed feedback overhead.

In an embodiment, the channel state information expansion and enhancement block includes a pre-transformation block,
where the pre-transformation block is cascaded at an input side of the encoder, and is used for performing at least one of the following:

adjusting probability distributions of channel state information of different multiple-input multiple-output (MIMO) layers to obtain channel state information of different MIMO layers with a unified probability distribution and a unified dimension; or

adjusting probability distributions and/or dimensions of channel state information of different multiple-input multiple-output (MIMO) ports to obtain channel state information of different MIMO ports with unified probability distributions and dimensions,

where the expanded and enhanced channel state information includes the channel state information of different MIMO layers with unified probability distributions and dimensions and/or the channel state information of different MIMO ports with unified probability distributions and dimensions.

In an embodiment, the channel state information expansion and enhancement block includes a subband filling block,

where the subband filling block is cascaded at an input side of the encoder, and is used for filling a number of subbands of the channel state information to obtain channel state information subjected to subband filling,

where the expanded and enhanced channel state information includes the channel state information subjected to subband filling.

In an embodiment, the downsampling block includes any one of the following configurations:

the downsampling block is a pooling layer;

the downsampling block is a fully connected layer with an input dimension greater than an output dimension; or

the downsampling block is a convolutional downsampling layer.

In an embodiment, an output dimension of the downsampling block is determined based on a type of the feedback overhead and a predetermined number of quantization bits.
In an embodiment, the pre-transformation block includes any one of the following configurations:

the pre-transformation block is an identity transformation layer;

the pre-transformation block adopts one fully connected layer in a spatial domain and a frequency domain respectively;

the pre-transformation block adopts one 2-dimensional convolutional layer in a spatial domain and a frequency domain;

the pre-transformation block adopts one fully connected layer in a combined dimension of a spatial domain and a frequency domain;

the pre-transformation block adopts one 1-dimensional convolutional layer in a combined dimension of a spatial domain and a frequency domain;

the pre-transformation block adopts one fully connected layer in a spatial domain; or

the pre-transformation block adopts one 1-dimensional convolutional layer in a spatial domain.

In an embodiment, the subband filling block is specifically used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model,

where the periodic cycle filling includes: copying each subband in sequence based on a sorting order of each subband in the group.

It should be noted that the terminal provided by the embodiments of the present application may implement all the method steps in the method embodiments performed by the terminal and may achieve the same technical effect. The parts and beneficial effects of this embodiment that are the same as those of the method embodiments are not described in detail.

FIG. 14 is a schematic structural diagram of a network device according to an embodiment of the present application. As shown in FIG. 14, the network device includes a memory 1420, a transceiver 1400 and a processor 1410.

The memory 1420 is used for storing a computer program, the transceiver 1400 is used for receiving and transmitting data under control of the processor 1410, and the processor 1410 is used for reading the computer program in the memory 1420 and performing the following operations:

receiving expanded and enhanced channel state information transmitted from a terminal; and

inputting the expanded and enhanced channel state information to a decoder model to obtain restored channel state information output from the decoder model,

where the decoder model includes a decoder, and a channel state information restoration block cascaded with the decoder.

Specifically, the transceiver 1400 is used for receiving and transmitting data under the control of the processor 1410.

In FIG. 14, a bus architecture may include any number of interconnected buses and bridges, which are linked together through various circuits of one or more processors represented by the processor 1410 and one or more memories represented by the memory 1420. The bus architecture may also link together various other circuits, such as peripherals, voltage regulators, and power management circuits, etc., which are well known in the art, and therefore are not further described in the present application. A bus interface provides an interface. The transceiver 1400 may include multiple elements, i.e., including a transmitter and a receiver, units for providing communication with various other devices over transmission media including wireless channels, wired channels, fiber optic cables, and the like. The processor 1410 is responsible for managing the bus architecture and general processing, and the memory 1420 may store data used by the processor 1410 when performing operations.

The processor 1410 may be a central processing unit (CPU), an application specific integrated circuit (ASIC), a field programmable gate array (FPGA) or a complex programmable logic device (CPLD), and the processor 1410 may also adopt a multi-core architecture.

In an embodiment, the expanded and enhanced channel state information includes a compressed feedback overhead; and the channel state information restoration block includes an upsampling block, where the upsampling block is cascaded at an input side of the decoder, and is used for restoring the compressed feedback overhead to obtain a restored feedback overhead.

In an embodiment, the expanded and enhanced channel state information includes channel state information of different multiple-input multiple-output (MIMO) layers with unified probability distributions and dimensions and/or channel state information of different multiple-input multiple-output (MIMO) ports with unified probability distributions and dimensions; and the channel state information restoration block includes a transformation block, where the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or

performing probability distribution and dimension restoration on the channel state information of different MIMO ports with unified probability distributions and dimensions to obtain channel state information of different MIMO ports with an original probability distribution and an original dimension.

In an embodiment, the expanded and enhanced channel state information includes channel state information subjected to subband filling; and the channel state information restoration block includes a subband clipping block, where the subband clipping block is cascaded at an output side of the decoder, and is used for clipping and/or combining the channel state information subjected to subband filling to obtain channel state information of an original number of subbands.

In an embodiment, the upsampling block includes any one of the following configurations:

the upsampling block is a neighbor interpolation layer;

the upsampling block is a fully connected layer with an input dimension smaller than an output dimension; or

the upsampling block is a transposed convolutional upsampling layer.

In an embodiment, an input dimension of the upsampling block is determined based on a type of the feedback overhead and a predetermined number of quantization bits.

In an embodiment, the transformation block includes any one of the following configurations:

the transformation block is an identity transformation layer;

the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

In an embodiment, the subband clipping block is specifically used for:
clipping and/or combining subbands in a subband group which have been subjected to subband periodic cycle.

It should be noted here that the network device provided by the embodiments of the present application may implement all the method steps in the method embodiments performed by the network device and may achieve the same technical effect. The parts and beneficial effects of this embodiment that are the same as those of the method embodiments are not described in detail.

FIG. 15 is a first structural schematic diagram of an apparatus for channel state information processing according to an embodiment of the present application. As shown in FIG. 15, an embodiment of the present application further provides an apparatus for channel state information processing, which is for used in a terminal. The apparatus includes:

an enhancing module 1510, used for inputting channel state information to an encoder model to obtain expanded and enhanced channel state information output from the encoder model; and

a transmitting module 1520, used for transmitting the expanded and enhanced channel state information to a network device,

where the encoder model includes an encoder and a channel state information expansion and enhancement block cascaded with the encoder.

In an embodiment, the channel state information expansion and enhancement block includes a downsampling block,

where the downsampling block is cascaded at an output side of the encoder, and is used for compressing a feedback overhead of the channel state information to obtain a compressed feedback overhead,

where the expanded and enhanced channel state information includes the compressed feedback overhead.

In an embodiment, the channel state information expansion and enhancement block includes a pre-transformation block,
where the pre-transformation block is cascaded at an input side of the encoder, and is used for performing at least one of the following:

adjusting probability distributions of channel state information of different multiple-input multiple-output (MIMO) layers to obtain channel state information of different MIMO layers with a unified probability distribution and a unified dimension; or

adjusting probability distributions and/or dimensions of channel state information of different multiple-input multiple-output (MIMO) ports to obtain channel state information of different MIMO ports with unified probability distributions and dimensions,

where the expanded and enhanced channel state information includes the channel state information of different MIMO layers with unified probability distributions and dimensions and/or the channel state information of different MIMO ports with unified probability distributions and dimensions.

In an embodiment, the channel state information expansion and enhancement block includes a subband filling block,

where the subband filling block is cascaded at an input side of the encoder, and is used for filling a number of subbands of the channel state information to obtain channel state information subjected to subband filling,

where the expanded and enhanced channel state information includes the channel state information subjected to subband filling.

In an embodiment, the downsampling block includes any one of the following configurations:

the downsampling block is a pooling layer;

the downsampling block is a fully connected layer with an input dimension greater than an output dimension; or

the downsampling block is a convolutional downsampling layer.

In an embodiment, an output dimension of the downsampling block is determined based on a type of the feedback overhead and a predetermined number of quantization bits.
In an embodiment, the pre-transformation block includes any one of the following configurations:

the pre-transformation block is an identity transformation layer;

the pre-transformation block adopts one fully connected layer in a spatial domain and a frequency domain respectively;

the pre-transformation block adopts one 2-dimensional convolutional layer in a spatial domain and a frequency domain;

the pre-transformation block adopts one fully connected layer in a combined dimension of a spatial domain and a frequency domain;

the pre-transformation block adopts one 1-dimensional convolutional layer in a combined dimension of a spatial domain and a frequency domain;

the pre-transformation block adopts one fully connected layer in a spatial domain; or

the pre-transformation block adopts one 1-dimensional convolutional layer in a spatial domain.

In an embodiment, the subband filling block is specifically used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model,

where the periodic cycle filling includes: copying each subband in sequence based on a sorting order of each subband in the group.

It should be noted here that the above-mentioned apparatus provided by the embodiments of the present application may implement all the method steps in the method embodiments performed by a terminal and may achieve the same technical effect. The parts and beneficial effects of this embodiment that are the same as those of the method embodiments are not described in detail.

FIG. 16 is a second structural schematic diagram of an apparatus for channel state information processing according to an embodiment of the present application. As shown in FIG. 16, an embodiment of the present application further provides an apparatus for channel state information processing, which is for use in a network device. The apparatus includes:

a receiving module 1610, used for receiving expanded and enhanced channel state information transmitted from a terminal; and

a restoring module 1620, used for inputting the expanded and enhanced channel state information to a decoder model to obtain restored channel state information output from the decoder model,

where the decoder model includes a decoder, and a channel state information restoration block cascaded with the decoder.

In an embodiment, the expanded and enhanced channel state information includes a compressed feedback overhead; and the channel state information restoration block includes an upsampling block,
where the upsampling block is cascaded at an input side of the decoder, and is used for restoring the compressed feedback overhead to obtain a restored feedback overhead.

In an embodiment, the expanded and enhanced channel state information includes channel state information of different multiple-input multiple-output (MIMO) layers with unified probability distributions and dimensions and/or channel state information of different multiple-input multiple-output (MIMO) ports with unified probability distributions and dimensions; and the channel state information restoration block includes a transformation block,
where the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or

performing probability distribution and dimension restoration on the channel state information of different MIMO ports with unified probability distributions and dimensions to obtain channel state information of different MIMO ports with an original probability distribution and an original dimension.

In an embodiment, the expanded and enhanced channel state information includes channel state information subjected to subband filling; and the channel state information restoration block includes a subband clipping block, where the subband clipping block is cascaded at an output side of the decoder, and is used for clipping and/or combining the channel state information subjected to subband filling to obtain channel state information of an original number of subbands.

In an embodiment, the upsampling block includes any one of the following configurations:

the upsampling block is a neighbor interpolation layer;

the upsampling block is a fully connected layer with an input dimension smaller than an output dimension; or

the upsampling block is a transposed convolutional upsampling layer.

In an embodiment, an input dimension of the upsampling block is determined based on a type of the feedback overhead and a predetermined number of quantization bits.

In an embodiment, the transformation block includes any one of the following configurations:

the transformation block is an identity transformation layer;

the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

In an embodiment, the subband clipping block is specifically used for:
clipping and/or combining subbands in a subband group which have been subjected to subband periodic cycle.

It should be noted here that the above-mentioned apparatus provided by the embodiments of the present application may implement all the method steps in the method embodiments performed by a network device and may achieve the same technical effect. The parts and beneficial effects of this embodiment that are the same as those of the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a processor-readable storage medium. The processor-readable storage medium stores a computer program. The computer program is used to cause a processor to perform the methods provided by the above embodiments, for example, including:

inputting channel state information to an encoder model to obtain expanded and enhanced channel state information output from the encoder model; and

transmitting the expanded and enhanced channel state information to a network device,

where the encoder model includes an encoder and a channel state information expansion and enhancement block cascaded with the encoder; or

receiving expanded and enhanced channel state information transmitted from a terminal; and

inputting the expanded and enhanced channel state information to a decoder model to obtain restored channel state information output from the decoder model,

where the decoder model includes a decoder, and a channel state information restoration block cascaded with the decoder.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a nonvolatile memory (NAND FLASH), a solid-state drive (SSD)), etc.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the number of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for channel state information processing, performed by a terminal, comprising:

   inputting channel state information to an encoder model to obtain expanded and enhanced channel state information output from the encoder model; and
   transmitting the expanded and enhanced channel state information to a network device,
   wherein the encoder model comprises an encoder and a channel state information expansion and enhancement block cascaded with the encoder.

2. The method of claim 1, wherein the channel state information expansion and enhancement block comprises a downsampling block,

   wherein the downsampling block is cascaded at an output side of the encoder, and is used for compressing a feedback overhead of the channel state information to obtain a compressed feedback overhead,
   wherein the expanded and enhanced channel state information comprises the compressed feedback overhead.

3. The method of claim 1, wherein the channel state information expansion and enhancement block comprises a pre-transformation block,
   wherein the pre-transformation block is cascaded at an input side of the encoder, and is used for performing at least one of the following:

   adjusting probability distributions of channel state information of different multiple-input multiple-output, MIMO, layers to obtain channel state information of different MIMO layers with a unified probability distribution and a unified dimension; or
   adjusting probability distributions and/or dimensions of channel state information of different multiple-input multiple-output, MIMO, ports to obtain channel state information of different MIMO ports with unified probability distributions and dimensions,

wherein the expanded and enhanced channel state information comprises the channel state information of different MIMO layers with unified probability distributions and dimensions and/or the channel state information of different MIMO ports with unified probability distributions and dimensions.

4. The method of claim 1, wherein the channel state information expansion and enhancement block comprises a subband filling block,

wherein the subband filling block is cascaded at an input side of the encoder, and is used for filling a number of subbands of the channel state information to obtain channel state information subjected to subband filling,
wherein the expanded and enhanced channel state information comprises the channel state information subjected to subband filling.

5. The method of claim 2, wherein the downsampling block comprises any one of the following configurations:

the downsampling block is a pooling layer;
the downsampling block is a fully connected layer with an input dimension greater than an output dimension; or
the downsampling block is a convolutional downsampling layer.

6. The method of claim 5, wherein an output dimension of the downsampling block is determined based on a type of the feedback overhead and a predetermined number of quantization bits.

7. The method of claim 3, wherein the pre-transformation block comprises any one of the following configurations:

the pre-transformation block is an identity transformation layer;
the pre-transformation block adopts one fully connected layer in a spatial domain and a frequency domain respectively;
the pre-transformation block adopts one 2-dimensional convolutional layer in a spatial domain and a frequency domain;
the pre-transformation block adopts one fully connected layer in a combined dimension of a spatial domain and a frequency domain;
the pre-transformation block adopts one 1-dimensional convolutional layer in a combined dimension of a spatial domain and a frequency domain;
the pre-transformation block adopts one fully connected layer in a spatial domain; or
the pre-transformation block adopts one 1-dimensional convolutional layer in a spatial domain.

8. The method of claim 4, wherein the subband filling block is used for:

in case that a remainder of the number of the subbands of the channel state information divided by a number of subbands input from the encoder model is greater than 0, grouping the subbands of the channel state information based on the number of the input subbands of the encoder model; and
performing periodic cycle filling on subbands in a target group where the number of the subbands of the channel state information is less than the number of the input subbands of the encoder model until the number of the subbands in the target group is equal to the number of the input subbands of the encoder model,
wherein the periodic cycle filling comprises: copying each subband in sequence based on a sorting order of each subband in the group.

9. A method for channel state information processing, performed by a network device, comprising:

receiving expanded and enhanced channel state information transmitted from a terminal; and
inputting the expanded and enhanced channel state information to a decoder model to obtain restored channel state information output from the decoder model,
wherein the decoder model comprises a decoder, and a channel state information restoration block cascaded with the decoder.

10. The method of claim 9, wherein the expanded and enhanced channel state information comprises a compressed feedback overhead; and the channel state information restoration block comprises an upsampling block,
wherein the upsampling block is cascaded at an input side of the decoder, and is used for restoring the compressed feedback overhead to obtain a restored feedback overhead.

11. The method of claim 9, wherein the expanded and enhanced channel state information comprises channel state information of different multiple-input multiple-output, MIMO, layers with unified probability distributions and dimensions and/or channel state information of different multiple-input multiple-output, MIMO, ports with unified probability distributions and dimensions; and the channel state information restoration block comprises a transformation block, wherein the transformation block is cascaded at an output side of the decoder, and is used for performing at least one of the following:

> performing probability distribution restoration on the channel state information of different MIMO layers with unified probability distributions and dimensions to obtain channel state information of different MIMO layers with an original probability distribution; or
> performing probability distribution and dimension restoration on the channel state information of different MIMO ports with unified probability distributions and dimensions to obtain channel state information of different MIMO ports with an original probability distribution and an original dimension.

12. The method of claim 9, wherein the expanded and enhanced channel state information comprises channel state information subjected to subband filling; and the channel state information restoration block comprises a subband clipping block,
wherein the subband clipping block is cascaded at an output side of the decoder, and is used for clipping and/or combining the channel state information subjected to subband filling to obtain channel state information of an original number of subbands.

13. The method of claim 10, wherein the upsampling block comprises any one of the following configurations:

> the upsampling block is a neighbor interpolation layer;
> the upsampling block is a fully connected layer with an input dimension smaller than an output dimension; or
> the upsampling block is a transposed convolutional upsampling layer.

14. The method of claim 13, wherein an input dimension of the upsampling block is determined based on a type of the feedback overhead and a predetermined number of quantization bits.

15. The method of claim 11, wherein the transformation block comprises any one of the following configurations:

> the transformation block is an identity transformation layer;
> the transformation block adopts one fully connected layer in a spatial domain and a frequency domain respectively;
> the transformation block adopts one 2-dimensional transposed convolutional layer in a spatial domain and a frequency domain;
> the transformation block adopts one fully connected layer in a combined dimension of a spatial domain and a frequency domain;
> the transformation block adopts one 1-dimensional convolutional layer in a combined dimension of a spatial domain and a frequency domain;
> the transformation block adopts one fully connected layer in a spatial domain; or
> the transformation block adopts one 1-dimensional convolutional layer in a spatial domain.

16. The method of claim 12, wherein the subband clipping block is used for:
clipping and/or combining subbands in a subband group which have been subjected to subband periodic cycle.

17. A terminal, comprising a memory, a transceiver and a processor,
wherein the memory is used for storing a computer program, the transceiver is used for receiving and transmitting data under control of the processor, and the processor is used for reading the computer program in the memory and performing the following operations:

> inputting channel state information to an encoder model to obtain expanded and enhanced channel state information output from the encoder model; and
> transmitting the expanded and enhanced channel state information to a network device,
> wherein the encoder model comprises an encoder and a channel state information expansion and enhancement block cascaded with the encoder.

18. The terminal of claim 17, wherein the channel state information expansion and enhancement block comprises a downsampling block,

wherein the downsampling block is cascaded at an output side of the encoder, and is used for compressing a feedback overhead of the channel state information to obtain a compressed feedback overhead,
wherein the expanded and enhanced channel state information comprises the compressed feedback overhead.

19. The terminal of claim 17, wherein the channel state information expansion and enhancement block comprises a pre-transformation block,
wherein the pre-transformation block is cascaded at an input side of the encoder, and is used for performing at least one of the following:

adjusting probability distributions of channel state information of different multiple-input multiple-output, MIMO, layers to obtain channel state information of different MIMO layers with a unified probability distribution and a unified dimension; or
adjusting probability distributions and/or dimensions of channel state information of different multiple-input multiple-output, MIMO, ports to obtain channel state information of different MIMO ports with unified probability distributions and dimensions,
wherein the expanded and enhanced channel state information comprises the channel state information of different MIMO layers with unified probability distributions and dimensions and/or the channel state information of different MIMO ports with unified probability distributions and dimensions.

20. The terminal of claim 17, wherein the channel state information expansion and enhancement block comprises a subband filling block,

wherein the subband filling block is cascaded at an input side of the encoder, and is used for filling a number of subbands of the channel state information to obtain channel state information subjected to subband filling,
wherein the expanded and enhanced channel state information comprises the channel state information subjected to subband filling.

21. The terminal of claim 18, wherein the downsampling block comprises any one of the following configurations:

the downsampling block is a pooling layer;
the downsampling block is a fully connected layer with an input dimension greater than an output dimension; or
the downsampling block is a convolutional downsampling layer.

22. The terminal of claim 21, wherein an output dimension of the downsampling block is determined based on a type of the feedback overhead and a predetermined number of quantization bits.

23. The terminal of claim 19, wherein the pre-transformation block comprises any one of the following configurations:

the pre-transformation block is an identity transformation layer;
the pre-transformation block adopts one fully connected layer in a spatial domain and a frequency domain respectively;
the pre-transformation block adopts one 2-dimensional convolutional layer in a spatial domain and a frequency domain;
the pre-transformation block adopts one fully connected layer in a combined dimension of a spatial domain and a frequency domain;
the pre-transformation block adopts one 1-dimensional convolutional layer in a combined dimension of a spatial domain and a frequency domain;
the pre-transformation block adopts one fully connected layer in a spatial domain; or
the pre-transformation block adopts one 1-dimensional convolutional layer in a spatial domain.

24. The terminal of claim 20, wherein the subband filling block is used for:

in case that a remainder of the number of the subbands of the channel state information divided by a number of subbands input from the encoder model is greater than 0, grouping the subbands of the channel state information based on the number of the input subbands of the encoder model; and

performing periodic cycle filling on subbands in a target group where the number of the subbands of the channel state information is less than the number of the input subbands of the encoder model until the number of the subbands in the target group is equal to the number of the input subbands of the encoder model, wherein the periodic cycle filling comprises: copying each subband in sequence based on a sorting order of each subband in the group.

25. A network device, comprising a memory, a transceiver and a processor,
wherein the memory is used for storing a computer program, the transceiver is used for receiving and transmitting data under control of the processor, and the processor is used for reading the computer program in the memory and performing the following operations:

receiving expanded and enhanced channel state information transmitted from a terminal; and
inputting the expanded and enhanced channel state information to a decoder model to obtain restored channel state information output from the decoder model,
wherein the decoder model comprises a decoder, and a channel state information restoration block cascaded with the decoder.

26. The network device of claim 25, wherein the expanded and enhanced channel state information comprises a compressed feedback overhead; and the channel state information restoration block comprises an upsampling block, wherein the upsampling block is cascaded at an input side of the decoder, and is used for restoring the compressed feedback overhead to obtain a restored feedback overhead.

27. The network device of claim 25, wherein the expanded and enhanced channel state information comprises channel state information of different multiple-input multiple-output, MIMO, layers with unified probability distributions and dimensions and/or channel state information of different multiple-input multiple-output, MIMO, ports with unified probability distributions and dimensions; and the channel state information restoration block comprises a transformation block,
wherein the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or
performing probability distribution and dimension restoration on the channel state information of different MIMO ports with unified probability distributions and dimensions to obtain channel state information of different MIMO ports with an original probability distribution and an original dimension.

28. The network device of claim 25, wherein the expanded and enhanced channel state information comprises channel state information subjected to subband filling; and the channel state information restoration block comprises a subband clipping block,
wherein the subband clipping block is cascaded at an output side of the decoder, and is used for clipping and/or combining the channel state information subjected to subband filling to obtain channel state information of an original number of subbands.

29. The network device of claim 26, wherein the upsampling block comprises any one of the following configurations:

the upsampling block is a neighbor interpolation layer;
the upsampling block is a fully connected layer with an input dimension smaller than an output dimension; or
the upsampling block is a transposed convolutional upsampling layer.

30. The network device of claim 29, wherein an input dimension of the upsampling block is determined based on a type of the feedback overhead and a predetermined number of quantization bits.

31. The network device of claim 27, wherein the transformation block comprises any one of the following configurations:

the transformation block is an identity transformation layer;
the transformation block adopts one fully connected layer in a spatial domain and a frequency domain respectively;

the transformation block adopts one 2-dimensional transposed convolutional layer in a spatial domain and a frequency domain;

the transformation block adopts one fully connected layer in a combined dimension of a spatial domain and a frequency domain;

the transformation block adopts one 1-dimensional convolutional layer in a combined dimension of a spatial domain and a frequency domain;

the transformation block adopts one fully connected layer in a spatial domain; or

the transformation block adopts one 1-dimensional convolutional layer in a spatial domain.

32. The method for channel state information processing of claim 28, wherein the subband clipping block is used for: clipping and/or combining subbands in a subband group which have been subjected to subband periodic cycle.

33. An apparatus for channel state information processing, comprising:

an enhancing module, used for inputting channel state information to an encoder model to obtain expanded and enhanced channel state information output from the encoder model; and

a transmitting module, used for transmitting the expanded and enhanced channel state information to a network device,

wherein the encoder model comprises an encoder and a channel state information expansion and enhancement block cascaded with the encoder.

34. The apparatus of claim 33, wherein the channel state information expansion and enhancement block comprises a downsampling block,

wherein the downsampling block is cascaded at an output side of the encoder, and is used for compressing a feedback overhead of the channel state information to obtain a compressed feedback overhead,

wherein the expanded and enhanced channel state information comprises the compressed feedback overhead.

35. The apparatus of claim 33, wherein the channel state information expansion and enhancement block comprises a pre-transformation block,

wherein the pre-transformation block is cascaded at an input side of the encoder, and is used for performing at least one of the following:

adjusting probability distributions of channel state information of different multiple-input multiple-output, MIMO, layers to obtain channel state information of different MIMO layers with a unified probability distribution and a unified dimension; or

adjusting probability distributions and/or dimensions of channel state information of different multiple-input multiple-output, MIMO, ports to obtain channel state information of different MIMO ports with unified probability distributions and dimensions,

wherein the expanded and enhanced channel state information comprises the channel state information of different MIMO layers with unified probability distributions and dimensions and/or the channel state information of different MIMO ports with unified probability distributions and dimensions.

36. The apparatus of claim 33, wherein the channel state information expansion and enhancement block comprises a subband filling block,

wherein the subband filling block is cascaded at an input side of the encoder, and is used for filling a number of subbands of the channel state information to obtain channel state information subjected to subband filling,

wherein the expanded and enhanced channel state information comprises the channel state information subjected to subband filling.

37. The apparatus of claim 34, wherein the downsampling block comprises any one of the following configurations:

the downsampling block is a pooling layer;

the downsampling block is a fully connected layer with an input dimension greater than an output dimension; or

the downsampling block is a convolutional downsampling layer.

38. The apparatus of claim 37, wherein an output dimension of the downsampling block is determined based on a type of the feedback overhead and a predetermined number of quantization bits.

39. The apparatus of claim 35, wherein the pre-transformation block comprises any one of the following configurations:

the pre-transformation block is an identity transformation layer;
the pre-transformation block adopts one fully connected layer in a spatial domain and a frequency domain respectively;
the pre-transformation block adopts one 2-dimensional convolutional layer in a spatial domain and a frequency domain;
the pre-transformation block adopts one fully connected layer in a combined dimension of a spatial domain and a frequency domain;
the pre-transformation block adopts one 1-dimensional convolutional layer in a combined dimension of a spatial domain and a frequency domain;
the pre-transformation block adopts one fully connected layer in a spatial domain; or
the pre-transformation block adopts one 1-dimensional convolutional layer in a spatial domain.

40. The apparatus of claim 36, wherein the subband filling block is used for:

in case that a remainder of the number of the subbands of the channel state information divided by a number of subbands input from the encoder model is greater than 0, grouping the subbands of the channel state information based on the number of the input subbands of the encoder model; and
performing periodic cycle filling on subbands in a target group where the number of the subbands of the channel state information is less than the number of the input subbands of the encoder model until the number of the subbands in the target group is equal to the number of the input subbands of the encoder model,
wherein the periodic cycle filling comprises: copying each subband in sequence based on a sorting order of each subband in the group.

41. An apparatus for channel state information processing, comprising:

a receiving module, used for receiving expanded and enhanced channel state information transmitted from a terminal; and
a restoring module, used for inputting the expanded and enhanced channel state information to a decoder model to obtain restored channel state information output from the decoder model,
wherein the decoder model comprises a decoder, and a channel state information restoration block cascaded with the decoder.

42. The apparatus of claim 41, wherein the expanded and enhanced channel state information comprises a compressed feedback overhead; and the channel state information restoration block comprises an upsampling block,
wherein the upsampling block is cascaded at an input side of the decoder, and is used for restoring the compressed feedback overhead to obtain a restored feedback overhead.

43. The apparatus of claim 41, wherein the expanded and enhanced channel state information comprises channel state information of different multiple-input multiple-output, MIMO, layers with unified probability distributions and dimensions and/or channel state information of different multiple-input multiple-output, MIMO, ports with unified probability distributions and dimensions; and the channel state information restoration block comprises a transformation block, wherein the transformation block is cascaded at an output side of the decoder, and is used for performing at least one of the following:

performing probability distribution restoration on the channel state information of different MIMO layers with unified probability distributions and dimensions to obtain channel state information of different MIMO layers with an original probability distribution; or
performing probability distribution and dimension restoration on the channel state information of different MIMO ports with unified probability distributions and dimensions to obtain channel state information of different MIMO ports with an original probability distribution and an original dimension.

44. The apparatus of claim 41, wherein the expanded and enhanced channel state information comprises channel state information subjected to subband filling; and the channel state information restoration block comprises a subband clipping block,

wherein the subband clipping block is cascaded at an output side of the decoder, and is used for clipping and/or combining the channel state information subjected to subband filling to obtain channel state information of an original number of subbands.

45. The apparatus of claim 42, wherein the upsampling block comprises any one of the following configurations:

   the upsampling block is a neighbor interpolation layer;
   the upsampling block is a fully connected layer with an input dimension smaller than an output dimension; or
   the upsampling block is a transposed convolutional upsampling layer.

46. The apparatus of claim 45, wherein an input dimension of the upsampling block is determined based on a type of the feedback overhead and a predetermined number of quantization bits.

47. The apparatus of claim 43, wherein the transformation block comprises any one of the following configurations:

   the transformation block is an identity transformation layer;
   the transformation block adopts one fully connected layer in a spatial domain and a frequency domain respectively;
   the transformation block adopts one 2-dimensional transposed convolutional layer in a spatial domain and a frequency domain;
   the transformation block adopts one fully connected layer in a combined dimension of a spatial domain and a frequency domain;
   the transformation block adopts one 1-dimensional convolutional layer in a combined dimension of a spatial domain and a frequency domain;
   the transformation block adopts one fully connected layer in a spatial domain; or
   the transformation block adopts one 1-dimensional convolutional layer in a spatial domain.

48. The apparatus of claim 44, wherein the subband clipping block is used for:
   clipping and/or combining subbands in a subband group which have been subjected to subband periodic cycle.

49. A processor-readable storage medium, wherein the processor-readable storage medium stores a computer program, and the computer program is used for causing a processor to perform the method of any one of claims 1 to 8, or to perform the method of any one of claims 9 to 16.

Input

Output

Encode
feature

$X$

$Z = f(X)$

$\hat{X} = g(Z)$

Encoder

Decoder

FIG. 1

Terminal side

Network side

Channel
information V

AI
encoder

Codeword
C

Quantizer

Binary bit
stream

Dequantizer

Codeword
C'

AI
decoder

Restored
channel
information V'

FIG. 2

Start

Inputting channel state information to an encoder model to obtain expanded and enhanced channel state information output from the encoder model ___310

Transmitting the expanded and enhanced channel state information to a network device ___320

End

FIG. 3

FIG. 4

FIG. 5

FIG. 6

```
        ┌─────────┐
        │  Start  │
        └─────────┘
             │
             ▼
┌──────────────────────────────────────────────────────────┐
│ Receiving expanded and enhanced channel state information │   710
│ transmitted from a terminal                               │
└──────────────────────────────────────────────────────────┘
             │
             ▼
┌──────────────────────────────────────────────────────────┐
│ Inputting the expanded and enhanced channel state         │   720
│ information to a decoder model to obtain restored channel  │
│ state information output from the decoder model            │
└──────────────────────────────────────────────────────────┘
             │
             ▼
        ┌─────────┐
        │   End   │
        └─────────┘
```

FIG. 7

FIG. 8

FIG. 9

FIG. 10

FIG. 11

Subband periodic cycle filling

MIMO port selection

32-port → PPT-32 block
24-port → PPT-24 block
16-port → PPT-16 block
12-port → PPT-12 block

EN block

Feedback overhead selection

DS-20 block — 20-bit → US-20 block
DS-40 block — 40-bit → US-40 block
DS-60 block — 60-bit → US-60 block
⋮
DS-320 block — 320-bit → US-320 block

DE block

PT-32 block
PT-24 block
PT-16 block
PT-12 block

Subband backward filling

FIG. 12

```
     ┌─────────── 1310
┌──────────────┐          ┌──────────────┐         ┌─────────── 1300
│  Processor   │◄════════►│              │         ┌──────────────┐
└──────────────┘          │              │◄═══════►│  Transceiver │
     ┌─────────── 1320    │ Bus interface│         └──────────────┘
┌──────────────┐          │              │
│   Memory     │◄════════►│              │
└──────────────┘          └──────┬───────┘
                                 ║
                                 ║   ┌──── 1330
                          ┌──────▼───────┐
                          │    User      │
                          │  interface   │
                          └──────────────┘
```

FIG. 13

```
     ┌─────────── 1410
┌──────────────┐          ┌──────────────┐         ┌─────────── 1400
│  Processor   │◄════════►│              │         ┌──────────────┐
└──────────────┘          │ Bus interface│◄═══════►│  Transceiver │
     ┌─────────── 1420    │              │         └──────────────┘
┌──────────────┐          │              │
│   Memory     │◄════════►│              │
└──────────────┘          └──────────────┘
```

FIG. 14

```
    ┌──── 1510                  ┌──── 1520
┌──────────────────┐      ┌──────────────────┐
│                  │      │   Transmitting   │
│ Enhancing module │──────│     module       │
└──────────────────┘      └──────────────────┘
```

FIG. 15

```
    ┌──── 1610                  ┌──── 1620
┌──────────────────┐      ┌──────────────────┐
│                  │      │                  │
│ Receiving module │──────│ Restoring module │
└──────────────────┘      └──────────────────┘
```

FIG. 16

## INTERNATIONAL SEARCH REPORT

| International application No. |
| --- |
| **PCT/CN2023/112162** |

### A. CLASSIFICATION OF SUBJECT MATTER

H04B7/06(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNKI, IEEE, 3GPP, CNTXT, DWPI, ENTXT, ENTXTC, VEN: 信道状态, 增强, 扩展, 解码, 编码, 并联, 并行, 多个, 多路, 级联, 人工智能, 机器学习, 神经网络, CSI, enhanc+, scalab+, extend+, decoder, encoder, parallel, number, multi+, AI, ML, neural network , +NN

### C. DOCUMENTS CONSIDERED TO BE RELEVANT

| Category* | Citation of document, with indication, where appropriate, of the relevant passages | Relevant to claim No. |
| --- | --- | --- |
| PX | CATT. "Evaluation on AI/ML for CSI feedback enhancement" *3GPP TSG RAN WG1 #112, R1-2300671*, 03 March 2023 (2023-03-03), pp. 7-11 | 1-49 |
| PX | JIN, Liqiang et al. "Scalable Framework for Deep Learning based CSI Feedback" *https://arxiv.org/pdf/2210.09849.pdf*, 18 October 2022 (2022-10-18), pp. 1-6 | 1-49 |
| X | CN 114501353 A (VIVO COMMUNICATION TECHNOLOGY CO., LTD.) 13 May 2022 (2022-05-13) description, paragraphs [0032]-[0167] and [0271]-[0290] | 9-16, 25-32, 41-49 |
| Y | CN 114501353 A (VIVO COMMUNICATION TECHNOLOGY CO., LTD.) 13 May 2022 (2022-05-13) description, paragraphs [0032]-[0167] and [0271]-[0290] | 1-8, 17-24, 33-40, 49 |
| Y | CN 109672464 A (XIDIAN UNIVERSITY) 23 April 2019 (2019-04-23) description, paragraphs [0028]-[0059] | 1-8, 17-24, 33-40, 49 |

☑ Further documents are listed in the continuation of Box C.       ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 October 2023** | **20 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 572 171 A1

**INTERNATIONAL SEARCH REPORT**

| International application No. |
| --- |
| **PCT/CN2023/112162** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114172765 A (CHINA ACADEMY OF INFORMATION AND COMMUNICATIONS TECHNOLOGY) 11 March 2022 (2022-03-11)<br>entire document | 1-49 |
| A | CN 114884549 A (YANTAI BRANCH, INSTITUTE OF COMPUTING TECHNOLOGY, CHINESE ACADEMY OF SCIENCE) 09 August 2022 (2022-08-09)<br>entire document | 1-49 |
| A | US 2021319286 A1 (IMPERIAL COLLEGE SCIENCE TECHNOLOGY AND MEDICINE) 14 October 2021 (2021-10-14)<br>entire document | 1-49 |

**INTERNATIONAL SEARCH REPORT**
Information on patent family members

International application No.

**PCT/CN2023/112162**

| Patent document cited in search report | | | Publication date (day/month/year) | Patent family member(s) | | | Publication date (day/month/year) |
|---|---|---|---|---|---|---|---|
| CN | 114501353 | A | 13 May 2022 | WO | 2022083619 | A1 | 28 April 2022 |
| | | | | US | 2023261815 | A1 | 17 August 2023 |
| | | | | EP | 4220486 | A1 | 02 August 2023 |
| CN | 109672464 | A | 23 April 2019 | | None | | |
| CN | 114172765 | A | 11 March 2022 | WO | 2023097869 | A1 | 08 June 2023 |
| CN | 114884549 | A | 09 August 2022 | | None | | |
| US | 2021319286 | A1 | 14 October 2021 | EP | 3837844 | A1 | 23 June 2021 |
| | | | | WO | 2020035683 | A1 | 20 February 2020 |
| | | | | GB | 2576499 | A | 26 February 2020 |

Form PCT/ISA/210 (patent family annex) (July 2022)

**REFERENCES CITED IN THE DESCRIPTION**

**Patent documents cited in the description**

- CN 202210969110